# EUROPÄISCHE PATENTSCHRIFT

(11) **EP 4 028 208 B1**
(45) Veröffentlichungstag und Bekanntmachung des Hinweises auf die Patenterteilung: **25.12.2024**
(21) Anmeldenummer: 20757243.9
(22) Anmeldetag: 10.08.2020
(51) Int. Cl.: B23Q 1/00, B23Q 7/14

(54) **VORRICHTUNG ZUM SCHWENKEN, WENDEN UND WECHSELN VON WERKSTÜCK-PALETTEN AN EINEM HORIZONTAL-BEARBEITUNGSZENTRUM**
APPARATUS FOR PIVOTING, TURNING AND CHANGING WORKPIECE PALLETS ON A HORIZONTAL PROCESSING CENTER
APPAREIL POUR FAIRE PIVOTER, TOURNER ET CHANGER DES PALETTES DE PIÈCE À TRAVAILLER SUR UN CENTRE DE TRAITEMENT HORIZONTAL

(30) Priorität: 11.09.2019 DE 102019213871
(43) Veröffentlichungstag der Anmeldung: 20.07.2022
(73) Patentinhaber: Bavius Technologie GmbH, 88255 Baienfurt (DE)
(72) Erfinder: BADER, Simon, 88430 Rot an der Rot (DE)
(74) Vertreter: Grünecker Patent- und Rechtsanwälte PartG mbB
(86) Internationale Anmeldenummer: PCT/EP2020/072338
(87) Internationale Veröffentlichungsnummer: WO 2021/047837

(56) Entgegenhaltungen:
- DE-A1- 102017 217 878
- FR-A1- 2 972 951
- US-B1- 6 382 400
- US-B2- 7 128 198

## Beschreibung

Die Erfindung betrifft eine Vorrichtung gemäß Oberbegriff des Patentanspruchs 1.

Aus der Praxis ist es bekannt, zwei Rücken an Rücken an den Palettenträgern angedockte Paletten gemeinsam an die Energieversorgung des Horizontal-Bearbeitungszentrums anzuschließen. Aus diesem Anschlusskonzept resultiert jedoch der Nachteil, dass eine einzelne Palette zumindest nicht entnommen werden kann, weil sie beim Schwenken und Wenden dann nicht mit Vakuum versorgt wird, das zur Werkstückfixierung auf der Palette benötigt wird. Dies resultiert auch in einem Zeitverlust bei einem Palettenwechsel-Zyklus.

Bei einer aus DE 10 2017 217 878 A1 bekannten Vorrichtung zum Schwenken, Wenden und Wechseln von Werkstückpaletten an einem Horizontal-Bearbeitungszentrum weist diese zwei beabstandete, synchron und zueinander parallel um eine Schwenkachse schwenkbare Schwenkarme auf, deren jeder einen um eine zur Schwenkachse parallele Wendeachse wendbaren Palettenträger zum wahlweisen An- und Abdocken wenigstens einer Palette aufweist.

Der Erfindung liegt die Aufgabe zugrunde, eine Vorrichtung der eingangs genannten Art dahingehend zu verbessern, dass auch eine einzelne Palette zumindest aus dem Horizontal-Bearbeitungszentrum entnommen oder in dieses eingebracht werden kann, ohne deren Vakuumversorgung zu gefährden.

Die gestellte Aufgabe wird mit den Merkmalen des Anspruchs 1 gelöst.

Da die Versorgung der jeweiligen Palette beim Schwenken und Wenden nicht aus dem Horizontal-Bearbeitungszentrum stattfindet, sondern über die am Palettenträger angebrachte Energieversorgungs-Schnittstelle, ist auch beim Aufnehmen, Schwenken und Wenden, sowie Entnehmen einer einzelnen Palette deren Vakuumversorgung gewährleistet. Über die Schnittstelle können auch andere Arbeitsmedien und Signale zum Betreiben des Palettenträgers permanent übertragen werden. Der mit der Energieversorgungs-Schnittstelle ausgestattete Palettenträger ermöglicht es beim Palettenwechsel permanent während der Wende und Schwenkbewegungen auch nur einer Palette diese unabhängig vom Bearbeitungszentrum mit Arbeitsmedien zu versorgen, zumindest mit Vakuum zum Fixieren wenigstens eines Werkstücks auf der Rüstseite der Palette.

Zweckmäßig ist die Schnittstelle an einer mit dem Palettenträger verbundenen Mitnehmerplatte angeordnet, die, vorzugsweise an der zum Schwenkarm weisenden Außenseite des Palettenträgers festgelegt ist, und die vom Palettenträger bis über das freie Schwenkarmende greift. Die Schnittstelle ist stabil abgestützt und jederzeit gut erreichbar, wenn sie sich mit dem Palettenträger relativ zum Schwenkarm bewegt.

Die Mitnehmerplatte ist stabil und montagetechnisch günstig mit dem Palettenträger verschraubt. Sie kann einen gekrümmten Verlauf haben.

Zweckmäßig weist die Schnittstelle mehrere Anschlüsse zumindest für Vakuum und/oder Pneumatik und/oder Hydraulik und/oder elektrische oder optische Signale und/oder Strom und dergleichen auf. Diese Arbeitsmedien und die Signale werden zum Betrieb des Palettenträgers und gegebenenfalls zur Überwachung einer anzudockenden oder angedockten Palette benutzt.

Damit sich die Schnittstelle mit dem Palettenträger mitbewegen kann, ist sie über einen beispielsweise am Schwenkarm abgestützten flexiblen und beweglichen Versorgungsleitungskanal mit der z. B. stationär platzierten Energieversorgung verbunden. In dem Versorgungsleitungskanal sind verschiedene Leitungen und Kabel geschützt untergebracht, sodass sie mit der oder den Paletten, dem Schwenkarm und dem Palettenträger nicht kollidieren.

Die Anschlüsse der Schnittstelle können über fest oder lose verbaute Verbindungsleitungen, vorzugsweise mit Schnellkupplungen, mit am oder im Palettenträger angeordneten Einlässen verbindbar sein.

Beispielsweise ist am Palettenträger jeweils ein Vakuum-Einlass mit einer von mindestens zwei im Palettenträger pneumatisch zu einem Vakuumeinlass der jeweiligen Palette aus- und in den Palettenträger einfahrbar platzierten Vakuumglocken verbunden, wobei, vorzugsweise, jede Vakuumglocke wahlweise über ein Ventil aktivierbar oder deaktivierbar sein kann. Über das Ventil kann die jeweils mit einer Palette zusammenwirkende Vakuumglocke aktiviert sein, während im Falle der Abwesenheit einer zweiten Palette die dafür vorgesehene Vakuumglocke deaktiviert bleibt, um ein Zusammenbrechen des Vakuums zu vermeiden. Über die jeweilige Vakuumglocke wird das zur Werkstückfixierung benötigte Vakuum über große Querschnitte mit hohem Durchsatz zuverlässig übertragen, sobald die Vakuumglocke im Dichtschluss mit der Palette ist.

Ferner kann am Palettenträger jeweils ein Hydraulikeinlass mit einem Paar Hydraulikzylinder pro Palettenebene des Palettenträgers verbunden sein, mit denen über ausfahrbare und einfahrbare Stempel die jeweilige Palette in einer von zwei Palettenebenen andockbar oder abdockbar ist. Somit kann die Vorrichtung gleichzeitig zwei Paletten, dann Rücken an Rücken, manipulieren, oder jeweils eine einzelne Palette in einer von den beiden Palettenebenen des Palettenträgers.

Ferner kann am Palettenträger jeweils ein Elektro- und/oder Opto-Einlass mit wenigstens einem an der Innenseite des Palettenträgers angeordneten Signalüberträger, vorzugsweise einem induktiven oder optischen Koppler, verbunden sein, beispielsweise, um die ordnungsgemäße Andockung und den Andockzustand der Palette zu überwachen.

Da in der Bearbeitungsposition einer Palette im Horizontal-Bearbeitungszentrum die Palette von der Vorrichtung abgedockt ist, ist es zweckmäßig, wenn eine in Bearbeitungsposition in dem Horizontal-Bearbeitungszentrum fixierte, von den Palettenträgern abgedockte Palette mit wenigstens einer im Horizontal-Bearbeitungszentrum verstellbaren Vakuumglocke verbindbar ist. Diese Vakuumglocke im Horizontal-Bearbeitungszentrum sorgt dann für die korrekte Vakuumversorgung der Palette.

Anhand der Zeichnung werden Ausführungsformen des Erfindungsgegenstandes erläutert. Es zeigen:
- Fig. 1: eine Perspektivansicht einer Hälfte einer Vorrichtung zum Schwenken, Wenden und Wechseln von Paletten an einem Horizontal-Bearbeitungszentrum,
- Fig. 2: eine Perspektivansicht zu Fig. 1 in einer anderen Blickrichtung,
- Fig. 3: eine Perspektivdraufsicht, in Phantomdarstellung, auf Details der Vorrichtung, und
- Fig. 4: eine Perspektivdarstellung eines Ausschnitts eines Horizontal-Bearbeitungszentrums mit in Bearbeitungsposition fixierter Palette.

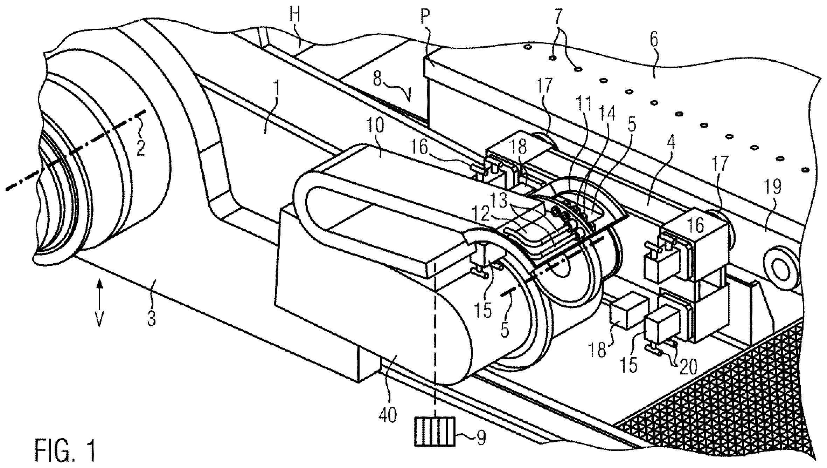

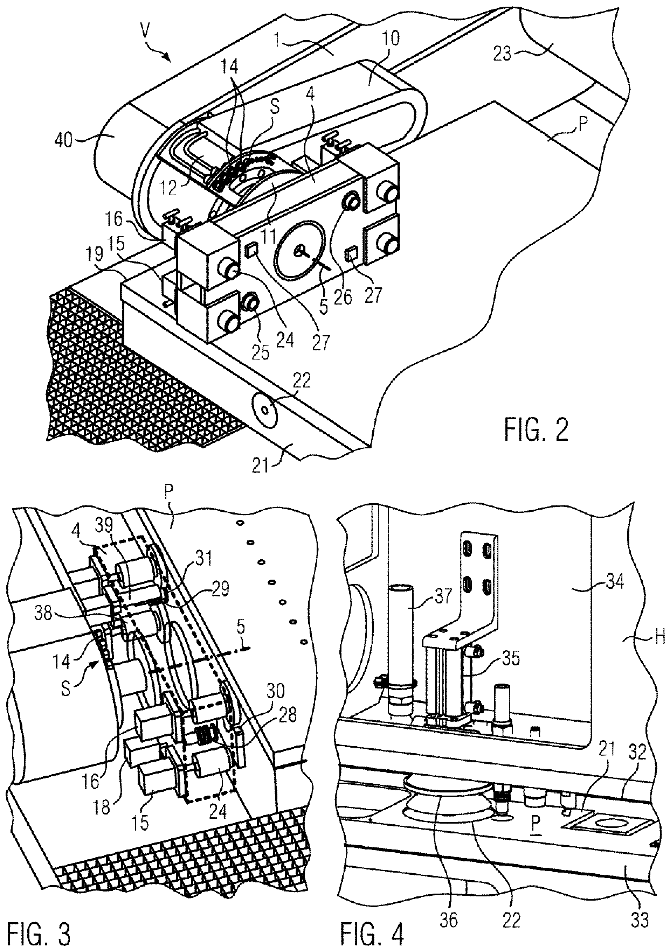

Eine in den Fig. 1 bis 3 gezeigte Vorrichtung V zum Schwenken, Wenden und Wechseln von Werkstück-Paletten P, eine sogenannte Palettenwechsel-Automation, ist beispielsweise an die Frontseite eines Horizontal-Bearbeitungszentrums H angebaut, in welchem Werkstücke, beispielsweise Flugzeugteile, spanend bearbeitet werden, die beim Wechsel und der Bearbeitung mit Vakuum auf einer Palette P positioniert sind. Zu diesem Zweck weist die Palette P an ihrer der Rückseite abgewandten Rüstseite 6 eine Vielzahl Saugöffnungen 7 auf, die mit Vakuum beaufschlagt werden, während in der in Fig. 4 gezeigten Bearbeitungsposition die Palette P mit wenigstens einem Werkstück in dem Horizontal-Bearbeitungszentrum H festgespannt und auch in der Bearbeitungsposition mit Vakuum beaufschlagt wird.

Die Vorrichtung V weist in den Fig. 1 und 2 zwei Schwenkarme 1 auf (von denen nur einer gezeigt ist), die in an das Horizontal-Bearbeitungszentrum H montierten und gegebenenfalls auf dem Boden abgestützten Lagerbockwangen 3 um eine annähernd bodenparallele Schwenkachse 2 aus der gezeigten bodennahen Position beiderseits einer Palettenauflage 8 über etwa 90° bis in eine annähernd vertikale Position hin- und herschwenkbar sind. Jeder Schwenkarm 1 trägt nahe dem freien Schwenkarmende einen blockförmigen Palettenträger 4, der um eine zur Schwenkachse 2 parallele Wendeachse 5 über etwa 180° wendbar ist und zum Manipulieren einer oder zweier Paletten P dient, die in zwei Palettenebenen an beiden Palettenträgern 4 an- und abdockbar sind.

Fig. 1 zeigt die Palette P mit ihrer nach oben weisenden Rüstseite 6 und den darin angeordneten Saugöffnungen 7 in einer Position auf der Palettenablage 8.

Eine beispielsweise stationäre Energieversorgung 9, die gegebenenfalls dem Horizontal-Bearbeitungszentrum H angehören kann, stellt unterschiedliche Arbeitsmedium oder Signale oder Elektrizität zur Verfügung, die zum Palettenwechsel und speziell zum Betätigen von Einrichtungen in jedem Palettenträger 4 dienen. Dies sind beispielsweise Vakuum, Pneumatik, Hydraulik, elektrische oder optische Signale, elektrischer Strom und dergleichen.

In einem flexiblen, mit Überlänge verlaufenden, gegebenenfalls auf dem Schwenkarm 1 oder einem den Antrieb (nicht gezeigt) zum Wenden des Palettenträgers 4 um die Wendeachse 5 am Schwenkarm 4 abdeckenden Gehäuse 40 abgestützten Leitungskanal 10 sind nicht dargestellte Kabel und Leitungen untergebracht, die zu einer am Palettenträger 4 an dessen zum Schwenkarm 1 weisender Außenseite montierten, z. B. verschraubten, Mitnehmerplatte 11, 12 und zu einer dort angeordneten Energieversorgungs-Schnittstelle S führen. Beispielsweise sind Leitungen 13 angedeutet, die auf der z. B. gekrümmten Mitnehmerplatte 11, 12 installiert sind. Die Energieversorgungs-Schnittstelle S weist eine Vielzahl von Anschlüssen 14 auf, die über nicht dargestellte Leitungen und Kabel mit Einlässen beispielsweise 20 und 39 am und im Palettenträger 4 verbunden sind. Die in den Fig. 1 und 2 sichtbare Oberseite der Mitnehmerplatte 11, 12 kann durch eine nicht gezeigte, die Schnittstelle S abschirmende Abdeckung verschlossen werden. Leitungen von den Anschlüssen 14 zum und in den Palettenträger 4 können durch ein Fenster Mitnehmerplatte 11, 12 verlegt sein,

Der Palettenträger 4 weist in der gezeigten Ausführungsform die zwei Palettenebenen definierenden, angebauten Hydraulikzylinder 16 und 15, jeweils paarweise, auf, mit denen in Fig. 3 gezeigte Stempel 24 in an einer Stirnseite 19 der Palette P offene Aufnahmen 17 hydraulisch einfahrbar sind, um die Palette P anzudocken. Ferner sind z. B. je ein Pneumatikzylinder 18 pro Palettenebene am Palettenträger 4 montiert, die zum Verstellen von in Fig. 3 gezeigten Vakuumglocken 28, 29 (mindestens eine pro Palettenebene) gegen Vakuumeinlässe 30, 31 in der Stirnseite 19 der Palette P anlegbar sind. Auch verlaufen elektrische Kabel (nicht gezeigt) beispielsweise zu an der Innenseite des Palettenträgers 4 angeordneten Signalüberträgern 27, z. B. induktiven oder Opto-Kopplern. Zu den Vakuumglocken 28, 29 gehörende Saugstellen 25, 26 (mindestens eine pro Palettenebene) sind in Fig. 2 an der Innenseite des Palettenträgers 4 gezeigt.

Gemäß Fig. 2 ist auch an der Längsseite der Palette P mindestens ein Saugeinlass 22 vorgesehen, der gemäß Fig. 4 zum Beaufschlagen der Palette P in der Bearbeitungsposition in dem Horizontal-Bearbeitungszentrum H Vakuum erhält.

Die Schwenkarme 1 können im Übrigen gemäß Fig. 2 um die Schwenkachse 2 drehfest über eine Königswelle 23 gekuppelt sein.

In Fig. 2 sind die Stempel 24 für die obere Palettenebene und die Stempel 24 für die untere Palettenebene in ausgefahrenem Zustand angedeutet. Die Stempel können wahlweise jeweils paarweise aus- und eingefahren werden, um eine Palette P in einer der Palettenebenen anzudocken oder abzudocken.

Gemäß Fig. 3 sind die Vakuumglocken 28 und 29 mittels der Pneumatikzylinder 18 wahlweise zu den Saugstellen 26, 25 stellbar. Dabei sind nicht dargestellte Ventile vorgesehen, um jede Vakuumglocke 28, 29 wahlweise zu deaktivieren oder aktivieren. In der Stirnseite 19 sind die Vakuumeinlässe 30, 31 (mindestens einer pro Palettenebene) bereichsweise angedeutet. Ferner zeigt Fig. 3 eine Verbindungsleitung 38 z. B. mit einem nicht gezeigten Magnetventil von einem Vakuum-Anschluss 14 der Energieversorgungs-Schnittstelle S zu einem Einlass 39 zur Vakuumglocke 29.

Beim Wenden der angedockten Palette P gemäß Fig. 1 um die Wendeachse 5 wickelt sich der flexible Leitungskanal 10 entsprechend der Drehung des Palettenträgers 4 relativ zum Schwenkarm 1 mehr oder weniger ab, sodass der Palettenträger 4 bzw. die angedockte Palette P permanent mit dem jeweiligen Arbeitsmedium versorgt wird bzw. Signale gegeben oder abgegriffen werden können.

Zum Überführen der in Fig. 1 gezeigten Palette P mit einem auf der Rüstseite 6 fixierten Werkstück und zum Wechseln der in der Arbeitsposition befindlichen Palette P aus dem Horizontal-Bearbeitungszentrum H wird die gemäß Fig. 1 angedockte Palette P zunächst von den Schwenkarmen 1 um etwa 45° hochgeschwenkt, und dann oder dabei im Uhrzeigersinn gewendet, sodass ihre der Rüstseite 6 abgewandte Rückseite zu der in der Bearbeitungsposition gemäß Fig. 4 in dem Horizontal-Bearbeitungszentrum befindlichen Rückseite 33 der Palette P weist. Die Palettenträger 4 werden dann mit den unteren, freien Palettenebenen von den Schwenkarmen 1 an den Stirnseiten 19 der in der Bearbeitungsposition befindlichen Palette P vorbei geschwenkt und an diese angedockt, sodass nun beide Paletten P Rücken an Rücken in der Vorrichtung positioniert sind. Die in der Bearbeitungsposition befindliche Palette P wird im Horizontal-Bearbeitungszentrum freigegeben, wonach die Schwenkarme 1 um ca. 45° nach unten schwenken, beide angedockten Paletten z. B. entgegen dem Uhrzeigersinn gewendet werden, sodass die in Fig. 1 gezeigte Palette P mit ihrer Rüstseite 6 und dem darauf befindlichen Werkstück in die Bearbeitungsposition im Horizontal-Bearbeitungszentrum gebracht und dort festgespannt und von den Palettenträgern 4 abgedockt wird, während die zuvor entnommene Palette P weiterhin angedockt bleibt. Dann wird die entnommene Palette P mit dem bearbeiteten oder teilbearbeiteten Werkstück um ca. 45° mit den Schwenkarmen 1 abgesenkt, und um die Wendeachse 5 so gewendet, dass schließlich ihre Rüstseite nach oben weist, wenn sie auf der Palettenauflage 8 abgelegt und abgedockt wird. Bei diesem Wechselvorgang sind permanent die beiden Paletten oder ist die jeweils einzelne Palette über die Energieversorgungs-Schnittstelle S zumindest mit Vakuum versorgt.

Da die in das Horizontal-Bearbeitungszentrum H eingebrachte und dort festgespannte und von den Palettenträgern 4 abgedockte Palette nicht mehr über die Schnittstelle S des Palettenträgers 4 mit Vakuum versorgt werden kann, ist im Horizontal-Bearbeitungszentrum H gemäß Fig. 4 wenigstens eine eigene Vakuumversorgung 37 vorgesehen, beispielsweise in einem Ausschnitt 34. Fig. 4 zeigt im Übrigen die Längsseite der Palette P mit dem Sauganschluss 22, der in Fig. 2 gezeigt ist, und gegen den beispielsweise mittels eines Pneumatikzylinders 35 eine Vakuumglocke 36 angelegt ist. Fig. 4 deutet einen zum Spannen der Palette P in der Bearbeitungsposition des Horizontal-Bearbeitungszentrums H und zum Bearbeiten vorgesehenen Ausschnitt 32, in dem die Palette P mit ihrer nach außen weisenden Rückseite 33 gespannt bleibt, während das Werkstück bearbeitet wird.

Zweckmäßig sind beide Palettenträger 4 der Vorrichtung V mit einer Energieversorgungs-Schnittstelle S ausgestattet, obwohl es genügen würde, nur einen Palettenträger 4 so auszustatten.

## Patentansprüche

1. Vorrichtung (V) zum Schwenken, Wenden und Wechseln von Werkstück-Paletten (P) an einem Horizontal-Bearbeitungszentrum (H), mit zwei beabstandeten, synchron und zueinander parallel um eine Schwenkachse (2) schwenkbaren Schwenkarmen (1), deren jeder einen um eine zur Schwenkachse (2) parallele Wendeachse (5) wendbaren Palettenträger (4) zum wahlweisen An- und Abdocken wenigstens einer Palette (P) aufweist, **dadurch gekennzeichnet, dass** jede Palette (P) zumindest beim Wenden und Schwenken an eine auch Vakuum zur Werkstückfixierung bereitstellende Energieversorgung (9) angeschlossen ist, und, net:dass an wenigstens einem Palettenträger (4) eine beim Schwenken der Schwenkarme (1) und Wenden des Palettenträgers (4) mitbewegbare, an die Energieversorgung (9) angeschlossene und mit jeder angedockten Palette (P) verbindbare Energieversorgungs-Schnittstelle (S) vorgesehen ist.

2. Vorrichtung nach Anspruch 1, **dadurch gekennzeichnet, dass** die Schnittstelle (S) an einer mit dem Palettenträger (4) verbundenen Mitnehmerplatte (11, 12) angeordnet ist, die, vorzugsweise, an der zum Schwenkarm (1) weisenden Außenseite des Palettenträgers (4) festgelegt ist, und vom Palettenträger (4) bis über das freie Schwenkarmende greift.

3. Vorrichtung nach Anspruch 2, **dadurch gekennzeichnet, dass** die Mitnehmerplatte (11, 12) mit dem Palettenträger (4) verschraubt ist.

4. Vorrichtung nach wenigstens einem der vorhergehenden Ansprüche, **dadurch gekennzeichnet, dass** die Schnittstelle (S) mehrere Anschlüsse (14) für Vakuum und/oder Pneumatik und/oder Hydraulik und/oder elektrische oder optische Signale und/oder Strom und dergleichen aufweist.

5. Vorrichtung nach Anspruch 1, **dadurch gekennzeichnet, dass** die Schnittstelle (S) über einen, vorzugsweise am Schwenkarm (1) abgestützten, flexiblen und beweglichen Versorgungsleitungskanal (10) mit der stationär platzierten Energieversorgung (9) verbunden ist.

6. Vorrichtung nach Anspruch 4, **dadurch gekennzeichnet, dass** die Anschlüsse (14) über fest oder lose verbaute Verbindungsleitungen (38), vorzugsweise über Schnellkupplungen, mit am oder im Palettenträger (4) angeordneten Einlässen (39) verbindbar sind.

7. Vorrichtung nach wenigstens einem der vorhergehenden Ansprüche, **dadurch gekennzeichnet, dass** am Palettenträger (4) jeweils ein Einlass (39) mit einer von mindestens zwei im Palettenträger (4) pneumatisch zu einem Vakuumeinlass (30, 31) der Palette (P) aus- und in den Palettenträger (4) einfahrbar platzierten Vakuumglocken (28, 29) verbunden ist, wobei, vorzugsweise, jede Vakuumglocke (28, 29) wahlweise über ein Ventil aktivierbar oder deaktivierbar ist.

8. Vorrichtung nach wenigstens einem der vorhergehenden Ansprüche, **dadurch gekennzeichnet, dass** am Palettenträger (4) jeweils ein Hydraulikeinlass (20) an einem Paar Hydraulikzylinder pro Palettenebene vorgesehen ist, mit denen über ausfahrbar und einfahrbar angeordnete Stempel (24) die jeweilige Palette (P) in einer von zwei Palettenebenen des Palettenträgers (4) an- und abdockbar ist.

9. Vorrichtung nach wenigstens einem der vorhergehenden Ansprüche, **dadurch gekennzeichnet, dass** am Palettenträger (4) jeweils ein Elektro- und/oder Opto-Anschluss (14) der Schnittstelle (S) mit wenigstens einem an der Innenseite des Palettenträgers (4) angeordneten Signalüberträger (27), vorzugsweise einem induktiven oder optischen Koppler, verbunden ist.

10. Vorrichtung nach wenigstens einem der vorhergehenden Ansprüche, **dadurch gekennzeichnet, dass** eine in Bearbeitungsposition in dem Horizontal-Bearbeitungszentrum fixierte, von den Palettenträgem (4) abgedockte Palette (P) mit wenigstens einer im Horizontal-Bearbeitungszentrum verstellbaren Vakuumglocke (36) verbindbar ist.

## Claims

1. Device (V) for swivelling, turning and changing workpiece pallets (P) on a horizontal machining center (H), with two spaced swivel arms (1) that can be swivelled synchronously and parallel to one another about a swivel axis (2), each of which has a pallet carrier (4) that can be turned about a turning axis (5) parallel to the swivel axis (2) for selectively docking and undocking of at least one pallet (P), **characterized in that** each pallet (P) is connected, at least when turning and swivelling, to an energy supply (9) which also provides a vacuum for fixing a workpiece, and is provided on at least one pallet carrier (4), a connectable power supply interface (S) is provided to move with the pallet carrier (4) upon swivelling the swivel arms (1) and turning the pallet carrier (4), the power supply interface (S) being connected with the energy supply (9) and being linkable with every docked pallet (P).

2. Device according to claim 1, **characterized in that** the connectable power supply interface (S) is arranged on a driver plate (11, 12) connected with the pallet carrier (4), which driver plate ( 11,12 )is advantageously fixed on an outside of the pallet carrier (4) facing the swivel arm (1), and extends from the pallet carrier (4) to beyond the free end of the swivel arm.

3. Device according to claim 2 , **characterized in that** the driver plate (11, 12) is screwed to the pallet carrier (4).

4. Device according to at least one of the preceding claims, **characterized in that** the interface (S) has a plurality of connections (14) for vacuum and/or pneumatics and/or hydraulics and/or electrical or optical signals and/or electric power and the like.

5. Device according to claim 1, **characterized in that** the power supply interface (S) is connected to the stationary placed energy supply (9) via a flexible and movable supply line duct (10), preferably supported on the swivel arm (1).

6. Device according to claim 4, **characterized in that** the connections (14) are connectable via permanently or loosely installed connecting lines (38), preferably via quick release couplings, with inlets (39) arranged on or in the pallet carrier (4).

7. Device according to at least one of the preceding claims, **characterized in that** on the pallet carrier (4), a respective vacuum inlet (39) is connected with one of at least two vacuum bells (28, 29), said vacuum bells being placed in the pallet carrier (4), in such a way that they are pneumatically extendable to a vacuum inlet (30, 31) of the pallet (P) and retractable into the pallet carrier (4), and wherein, preferentially, each vacuum bell (28, 29) is optionally activatable or deactivatable via a valve.

8. Device according to at least one of the preceding claims, **characterized in that** on the pallet carrier (4), one respective hydraulic inlet (20) is provided on a pair of hydraulic cylinders (45) per pallet level of two pallet levels, by means of which the respective pallet (P) can be docked and undocked in one of the two pallet levels of the pallet carrier (4) via props (24) which are arranged extendably and retractably.

9. Device according to at least one of the preceding claims, **characterized in that** on the pallet carrier (4), one respective electrical and/or opto-connection (14) of the power supply interface (S) is connected with at least one signal transmitter (27) provided on the inside of the pallet carrier (4), the transmitter preferably being an inductive or optical coupler.

10. Device according to at least one of the preceding claims, **characterized in that** a pallet (P) fixed in a machining position of the horizontal machining center (H) and undocked from the pallet carrier (4) is connectable with at least one vacuum bell (36) adjustably provided in the horizontal machining center (H).

## Revendications

1. Dispositif (V) pour faire pivoter, tourner et changer des palettes de pièces à usiner (P) sur un centre de traitement horizontal (H), comprenant deux bras pivotants(1) espacés, qui peuvent pivoter de manière synchrone et parallèlement l'un à l'autre autour d'un axe de pivotement (2), présentant chacun un support de palette (4) qui peut tourner autour d'un axe de rotation (5) parallèle à l'axe de pivotement (2), pour arrimer et désarrimer de manière sélective au moins une palette (P), **caractérisé en ce que** chaque palette (P) est connectée, au moins lors d'une rotation et d'un pivotement, à une alimentation électrique (9) qui fournit également un vide pour une fixation de pièce à usiner, et,
**en ce qu'**est prévue, sur au moins un support de palette (4) une interface d'alimentation électrique (S) mobile conjointement lors d'un pivotement du bras pivotant (1) et d'une rotation du support de palette (4), connectée à l'alimentation électrique (9) et pouvant être reliée à chaque palette (P) arrimée.

2. Dispositif selon la revendication 1, **caractérisé en ce que** l'interface (S) est agencée sur une plaque d'entraînement (11, 12) connectée au support de palette (4), qui est fixée, de préférence, sur la face extérieure du support de palette (4) tournée vers le bras pivotant (1), et s'étend depuis le support de palette (4) jusqu'à l'extrémité libre du bras pivotant.

3. Dispositif selon la revendication 2, **caractérisé en ce que** la plaque d'entraînement (11) est couplée au support de palette (4).

4. Dispositif selon au moins l'une des revendications précédentes, **caractérisé en ce que** l'interface (S) présente plusieurs raccords (14) pour un vide et/ou pneumatiques et/ou hydrauliques et/ou des signaux électriques ou optiques et/ou du courant, et analogues.

5. Dispositif selon la revendication 1, **caractérisé en ce que** l'interface (S) est connectée à l'alimentation électrique (9) par l'intermédiaire d'un canal d'alimentation (10) flexible et mobile, s'appuyant de préférence sur le bras pivotant (1).

6. Dispositif selon la revendication 4, **caractérisé en ce que** les raccords (14) peuvent être reliés à des entrées (39) agencées sur ou dans le support de palette (4) par l'intermédiaire de conduites de raccordement (38) installées de manière fixe ou libre, de préférence par l'intermédiaire de raccords rapides.

7. Dispositif selon au moins l'une des revendications précédentes, **caractérisé en ce que** sur le support de palette (4), une entrée (39) est connectée respectivement avec l'une d'au moins deux cloches de vide (28, 29) placées dans le support de palette (4) de manière pneumatique vers une entrée de vide (30, 31) de la palette (P) pouvant être sortie et rentrée dans le support de palette (4), chaque cloche de vide (28, 29) pouvant être activée ou désactivée sélectivement par l'intermédiaire d'une soupape.

8. Dispositif selon au moins l'une des revendications précédentes, **caractérisé en ce que** sur le support de palette (4) est prévue respectivement une entrée hydraulique (20) sur une paire de vérins hydrauliques par plan de palette, avec lesquelles la palette respective (P) peut être arrimée et désarrimée dans l'un des deux plans de palette du support de palette (4) par l'intermédiaire de poinçons (24) agencés de manière extensible et rétractable.

9. Dispositif selon au moins l'une des revendications précédentes, **caractérisé en ce que** sur le support de palette (4), une connexion électrique et/ou optique (14) de l'interface (S) est connectée respectivement à au moins un émetteur de signaux (27), de préférence un coupleur inductif ou optique, agencé sur la face intérieure du support de palette (4).

10. Dispositif selon au moins l'une des revendications précédentes, **caractérisé en ce qu'**une palette (P) arrimée en position d'usinage dans le centre d'usinage horizontal, désarrimée des supports de palettes (4), peut être reliée à au moins une cloche à vide (36) réglable dans le centre d'usinage horizontal.
